# EUROPEAN PATENT APPLICATION

(11) **EP 4 742 404 A1**
(43) Date of publication of application: **13.05.2026**
(21) Application number: 24937900.9
(22) Date of filing: 09.12.2024
(51) Int. Cl.: H01M 50/383, H01M 50/502, H01M 50/178, H01M 50/249

(54) **BATTERY MODULE**

(30) Priority: 03.05.2024 KR 20240059245
(71) Applicant: LG Energy Solution, Ltd., Seoul 07335 (KR)
(72) Inventor: KWAK, Won-Suk, Daejeon 34122 (KR)
(74) Representative: BCKIP Part mbB
(86) International application number: PCT/KR2024/020099
(87) International publication number: WO 2025/230077

(57) **Abstract**

Disclosed is a battery module. The battery module includes a case providing a space therein; a battery array including a plurality of battery cells positioned inside the case and stacked along a right and left direction, each battery cell having an accommodation portion extending in a front and rear direction and accommodating an electrode assembly and a sealing portion extending forward from the accommodation portion; a bus bar frame assembly positioned at a front side of the accommodation portion and electrically connected to the battery array; and a fire prevention cover positioned between the bus bar frame assembly and the accommodation portion and having an accommodation space for accommodating at least one sealing portion.

## Description

### TECHNICAL FIELD

The present disclosure relates to a battery module.

The present application claims priority to Korean Patent Application No. 10-2024-0059245 filed on May 3, 2024 in the Republic of Korea, the disclosures of which are incorporated herein by reference.

### BACKGROUND ART

As the demand for portable electronic products such as smartphones, tablet PCs, and smart watches increases significantly and electric vehicles become increasingly widespread, research is actively being conducted on batteries installed the portable electronic products, especially secondary batteries that can be repeatedly charged and discharged.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be called a battery cell. In addition, multiple battery modules may be connected to each other to form a battery pack.

However, if a plurality of battery modules are included in the battery pack as above and each battery module includes a plurality of battery cells, the battery pack may be vulnerable to a thermal chain reaction between battery modules or between battery cells. For example, if an event such as thermal runaway occurs inside one battery module, the thermal runaway needs to be prevented from propagating to other battery modules or other battery cells. If thermal runaway propagation between battery modules or battery cells is not properly prevented, an event occurring in a specific battery module or battery cell may cause a chain thermal reaction in other battery modules or other battery cells, which may cause an explosion or fire or enlarge the scale thereof.

In particular, if an event such as thermal runaway occurs in a battery module, gas or flame may be randomly discharged to the outside. At this time, if the discharge of gas or flame is not properly controlled, gas or flame may be discharged toward another battery module, which may cause a thermal chain reaction in other battery modules. In particular, a module terminal may exist at the front side of the battery module, and a component such as a module bus bar may exist for electrical connection with another battery module or battery pack. Accordingly, if flame is discharged to the front side of the battery module, the module terminal may be damaged inside the battery pack, causing an electrical short. In addition, since another battery module may exist at the front side of the battery module, if flame is discharged to the front side of a specific battery module, the discharged flame may be directed to another battery module, which may easily cause a fire to spread between battery modules.

If the thermal propagation between battery modules or battery cells is not properly controlled, the voltage drop of the battery module or battery pack may occur rapidly. This may cause a sudden shutdown of a device equipped with the battery module or battery pack, resulting in unexpected damage. For example, if a voltage drop of the battery pack occurs suddenly while an electric vehicle is in operation, it is impossible to secure sufficient time to move the electric vehicle to a safe location.

Moreover, if a fire or explosion occurs suddenly due to failure to properly control thermal propagation between battery modules or battery cells, there is a high possibility of causing casualties to users. For example, when thermal runaway occurs in an electric vehicle, if a certain amount of time is not secured before it progresses to a full-blown fire, the occupants may not be able to escape safely.

### DISCLOSURE

### Technical Problem

The present disclosure is designed to solve the problems of the related art, and therefore the present disclosure is directed to providing a battery module having an improved structure to appropriately control the emission of flame, etc. generated inside the battery module, and a battery pack and a vehicle including the same.

The present disclosure is also directed to providing a structure that blocks propagation of a thermal event occurring inside a battery module to adjacent battery cells.

The present disclosure is also directed to providing a structure that blocks a venting gas, ignitable particles, etc. from moving to adjacent battery cells when a thermal event occurs inside a battery module.

The present disclosure is also directed to providing a structure that prevents a bus bar frame assembly from being damaged due to a venting gas, ignitable particles, etc. when a thermal event occurs inside a battery module.

However, the technical problems that the present disclosure seeks to solve are not limited to the above, and other problems not mentioned herein will be clearly understood by those skilled in the art from the following disclosure.

### Technical Solution

In one aspect of the present disclosure, there is provided a battery module comprising: a case providing a space therein; a battery array including a plurality of battery cells positioned inside the case and stacked along a right and left direction, each battery cell having an accommodation portion extending in a front and rear direction and accommodating an electrode assembly and a sealing portion extending forward from the accommodation portion; a bus bar frame assembly positioned at a front side of the accommodation portion and electrically connected to the battery array; and a fire prevention cover positioned between the bus bar frame assembly and the accommodation portion and having an accommodation space for accommodating at least one sealing portion.

In addition, the fire prevention cover may contain a mica material.

In addition, the fire prevention cover may include a plate configured to cover a front side of the sealing portion; and a top wall protruding rearward from the plate and extending along the right and left direction to cover an upper side of the sealing portion.

In addition, the top wall may be extended to cover an upper side of the accommodation portion.

In addition, the fire prevention cover may further include a partition wall that protrudes rearward from the plate and extends along an upper and lower direction to partition the accommodation space.

In addition, the partition wall may be provided in plurality, and the plurality of partition walls may be arranged along the right and left direction.

In addition, the partition wall may be extended to be positioned between neighboring accommodation portions of the battery array.

In addition, the fire prevention cover may further include a side wall that protrudes rearward from the plate and extends along an upper and lower direction to cover an outer side of the sealing portion of an outermost battery cell of the battery array.

In addition, the side wall may be extended to cover the accommodation portion of the outermost battery cell.

In addition, the fire prevention cover may further include a bottom wall that protrudes rearward from the plate and extends along the right and left direction to cover a lower side of the sealing portion.

In addition, the bottom wall may be extended to be located below the accommodation portion.

In addition, the plate may have a slit, and the battery array may include an electrode lead that protrudes forward from the sealing portion and passes through the slit to be connect to the bus bar frame assembly.

A battery pack according to one aspect of the present disclosure may include the battery module of the present disclosure.

A vehicle according to another aspect of the present disclosure may include the battery module of the present disclosure.

### Advantageous Effects

According to at least one of the embodiments of the present disclosure, when gas or flame is generated inside the battery module, the emission of such gas or flame may be appropriately controlled.

According to at least one of the embodiments of the present disclosure, the electrical safety of a battery module may be improved.

According to at least one of the embodiments of the present disclosure, heat propagation may be suppressed.

According to at least one of the embodiments of the present disclosure, damage to a bus bar frame assembly may be prevented when a thermal event occurs.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery module according to an embodiment of the present disclosure.
FIG. 2 is a drawing showing the battery module of FIG. 1, in which some components are exploded.
FIG. 3 is an enlarged drawing showing a battery cell of FIG. 2.
FIGS. 4 and 5 are drawings showing a fire prevention cover of FIG. 2.
FIG. 6 is a cross-sectional view taken along the cutting line A-A' of FIG. 1.
FIG. 7 is an enlarged drawing showing a part C of FIG. 6.
FIG. 8 is an enlarged drawing showing the part C of FIG. 6 when a thermal event occurs.
FIG. 9 is a cross-sectional view taken along the cutting line B-B' of FIG. 1.
FIG. 10 is a cross-sectional view taken along the cutting line B-B' of FIG. 1 when a thermal event occurs.
FIG. 11 is a drawing showing a modified embodiment of FIG. 6.
FIG. 12 is an enlarged drawing showing a part D of FIG. 11.
FIG. 13 is a drawing showing a modified embodiment of FIG. 9.
FIG. 14 is an enlarged drawing showing a part E of FIG. 13.
FIG. 15 is an enlarged drawing showing a part F of FIG. 13.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

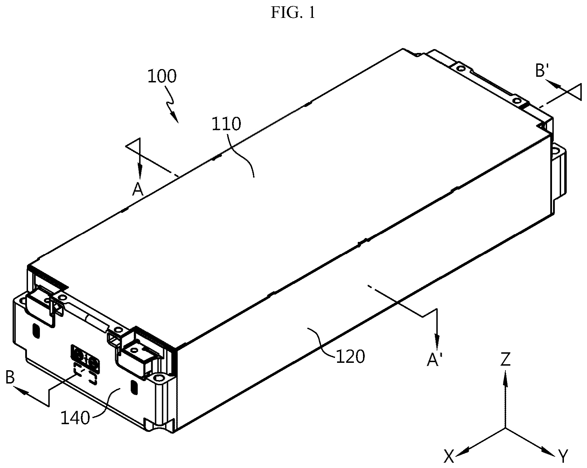

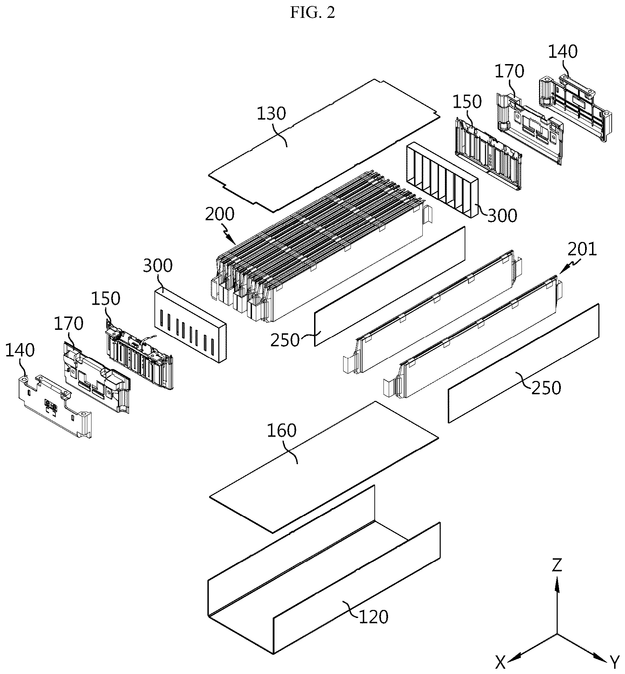

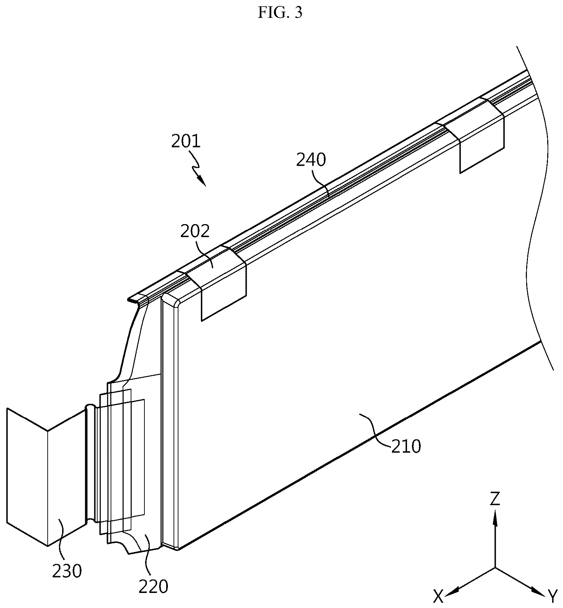

FIG. 1 is a diagram showing a battery module according to an embodiment of the present disclosure. FIG. 2 is a drawing showing the battery module of FIG. 1, in which some components are exploded. FIG. 3 is an enlarged drawing showing a battery cell 201 of FIG. 2.

Referring to FIGS. 1 to 3, the battery module according to an embodiment of the present disclosure may include a case 100, a battery array 200, a bus bar frame assembly 150, and a fire prevention cover 300.

The case 100 may have a rectangular parallelepiped shape. The case 100 may also be referred to as a frame 100. The case 100 may provide a space therein. In addition, the case 100 may be elongated along the front and rear direction or the X-axis direction. The case 100 may have a top plate 130, a bottom plate 110, and a pair of side plates 120. In addition, the case 100 may have a shape in which the front and rear surfaces are open. The top plate 130 and the bottom plate 110 may be arranged to face each other. The pair of side plates 120 may connect the top plate 130 and the bottom plate 110.

The bottom plate 110 and the pair of side plates 120 may be formed integrally. At this time, the bottom plate 110 and the pair of side plates 120 may be referred to as a lower frame 100 or a U-frame 100. The top plate 130 may be fastened, coupled, assembled, attached, or fixed to the lower frame 100 or the U-frame 100. For example, the top plate 130 may be coupled to the lower frame 100 or the U-frame 100 by welding.

The battery cell 201 may be provided in plurality. The plurality of battery cells 201 may constitute a battery array 200. The battery array 200 may be located inside the case 100. Also, the battery array 200 may be located on the upper surface of the bottom plate 110.

Each battery cell 201 may extend along the front and rear direction or the X-axis direction. The plurality of battery cells 201 may be stacked in the right and left direction or the Y-axis direction. At this time, the battery cell 201 may mean a secondary battery. The battery cell 201 may have an accommodation portion 210 including an electrode assembly and an electrolyte. In addition, the battery cell 201 may include a first sealing portion 220 extending to the front and rear sides of the accommodation portion 210. The first sealing portion 220 may be referred to as a front terrace portion 220. In addition, the battery cell 201 may include a second sealing portion 240 extending to the upper side of the accommodation portion 210. The second sealing portion 240 may be referred to as an upper terrace portion 240. The adhesive member 202 may bend or fold the second sealing portion 240 toward the accommodation portion 210. Also, the adhesive member 202 may fix the second sealing portion 240 in a bent or folded state.

The electrode lead 230 of the battery cell 201 may protrude toward the front and rear sides of the first sealing portion 220, respectively. In particular, the battery cell 201 may be a pouch-type secondary battery. Each battery cell 201 may extend along the front and rear direction or the X-axis direction. The electrode lead 230 may protrude toward the front and rear sides of each battery cell 201. However, the shape of the battery cell 201 is not limited to the pouch shape, and may have various shapes such as a cylindrical shape or a rectangular parallelepiped shape.

The battery array 200 may additionally include an adhesive member arranged between the battery cells 201. The adhesive member may fix adjacent battery cells 201.

The bus bar frame assembly 150 may be provided at the front and rear sides of the plurality of accommodation portions 210 of the battery array 200, respectively. The bus bar frame assembly 150 may be electrically connected to the electrode leads 230 of the plurality of accommodation portions 210 of the battery array 200.

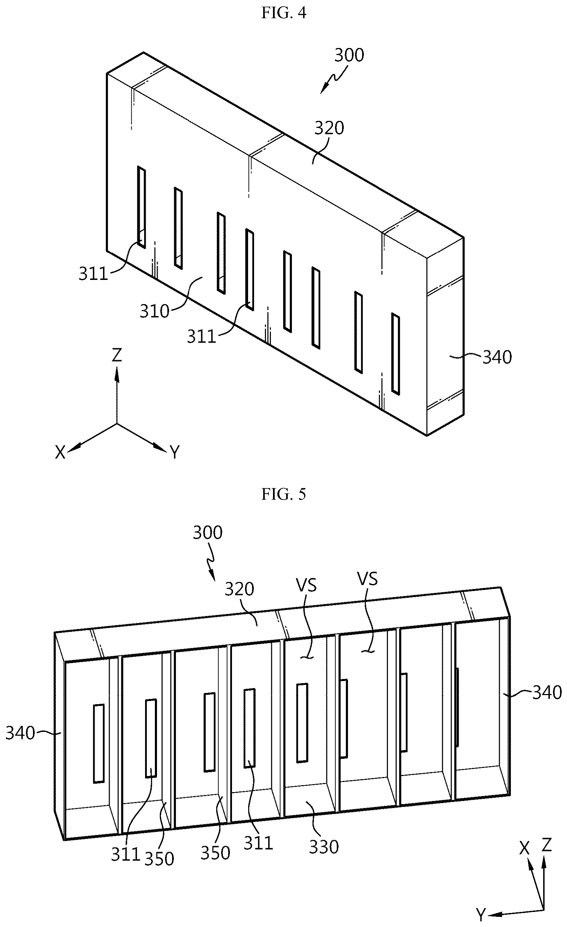

The fire prevention cover 300 may be positioned between the bus bar frame assembly 150 and the plurality of accommodation portions 210 of the battery array 200. The fire prevention cover 300 may be provided as a pair. In addition, the fire prevention cover 300 may have an accommodation space VS (see FIG. 5) that accommodates at least one first sealing portion 220. The accommodation space VS may also be referred to as a venting space VS. The accommodation space VS may accommodate the plurality of first sealing portions 220 of the battery array 200.

According to this configuration of the present disclosure, the thermal safety of the battery module may be improved. When a thermal event occurs, venting gas g or ignitable particles, etc. may be discharged through the first sealing portion 220. The fire prevention cover 300 may block the venting gas g or ignitable particles, etc. from moving to the bus bar frame assembly 150 or neighboring battery cells 201 by accommodating the first sealing portion 220. As a result, the fire prevention cover 300 may block the propagation of the thermal event.

Referring to FIGS. 1 to 3, the battery module according to an embodiment of the present disclosure may include an end cover 140, an insulation cover 170, a heat transfer member 160, and a pad 250.

The pair of end covers 140 may be respectively coupled to the front and rear sides of the case 100. The pair of end covers 140 may cover the front and rear surfaces of the case 100. The end cover 140 may have a rectangular shape.

The insulation cover 170 may be positioned between the end cover 140 and the bus bar frame assembly 150. The insulation cover 170 may electrically insulate the end cover 140 and the bus bar frame assembly 150. The insulation cover 170 may be provided as a pair. The insulation cover 170 may have a rectangular shape.

The heat transfer member 160 may be arranged below the plurality of battery cells 201 or the battery array 200. Also, the heat transfer member 160 may be arranged between the bottom plate 110 and the plurality of battery cells 201 or the battery array 200. The heat transfer member 160 may contain a material having high thermal conductivity. For example, the heat transfer member 160 may be a resin. Also, the heat transfer member may fix the plurality of battery cells 201 or the battery array 200.

The battery array 200 may include a pad 250. The pad 250 may be positioned between the plurality of battery cells 201. The pad 250 may be positioned between at least some of the battery cells 201 and/or at the periphery of the stack. For example, the pad 250 may be configured to be positioned between every two battery cells 201 stacked in the right and left direction.

The pad 250 may contain an elastic material to enable swelling absorption of the battery cell 201. For example, the pad 250 may be made of a foam material such as polyurethane. Alternatively, the pad 250 may contain a material capable of blocking heat or flame. For example, the pad 250 may contain an insulating material or a fire-retardant material such as silicone or mica.

FIGS. 4 and 5 are drawings showing a fire prevention cover 300 of FIG. 2. Referring to FIGS. 4 and 5, the fire prevention cover 300 according to an embodiment of the present disclosure may contain a material capable of blocking heat, flame, etc. For example, the fire prevention cover 300 may contain a mica material.

According to this configuration of the present disclosure, the thermal safety of the battery module may be improved. The fire prevention cover 300 may block the propagation of the venting gas g without being damaged even when the fire prevention cover 300 is exposed to the venting gas g.

Referring to FIGS. 4 and 5, the fire prevention cover 300 of the battery module according to an embodiment of the present disclosure may include a plate 310 and a top wall 320. The plate 310 may have a rectangular shape. The plate 310 may cover the front side of the plurality of first sealing portions 220 of the battery array 200. The plate 310 may entirely cover the plurality of first sealing portions 220 of the battery array 200.

The top wall 320 may protrude from the plate 310 in the rear or -X-axis direction. The top wall 320 may protrude from the upper edge of the plate 310. Also, the top wall 320 may extend along the right and left direction or the Y-axis direction. The top wall 320 may entirely cover the upper side of the plurality of first sealing portions 220 of the battery array 200. The top wall 320 and the plate 310 may be formed integrally. The top wall 320 and the plate 310 may form the accommodation space VS.

According to this configuration of the present disclosure, the thermal safety of the battery module may be improved. Since the top wall 320 covers the upper side of the first sealing portion 220, the movement of the venting gas g may be blocked. As a result, the propagation of the thermal event may be blocked.

Referring to FIGS. 4 and 5, the fire prevention cover 300 of the battery module according to an embodiment of the present disclosure may further include a partition wall 350. The partition wall 350 may protrude rearward from the plate 310. The partition wall 350 and the plate 310 may be formed integrally. The partition wall 350 may extend along the upper and lower direction or the Z-axis direction. In addition, the partition wall 350 may partition the accommodation space VS. The partition wall 350 may be connected to the top wall 320. In addition, the partition wall 350 may cover one side of the first sealing portion 220.

According to this configuration of the present disclosure, the thermal safety of the battery module may be improved. Since the partition wall 350 partitions the accommodation space VS, it is possible to block the movement of the venting gas g. As a result, the propagation of the thermal event may be blocked.

Referring to FIGS. 4 and 5, the fire prevention cover 300 of the battery module according to an embodiment of the present disclosure may further include a side wall 340. The side wall 340 may protrude from the plate 310 in the rear or -X-axis direction. The side wall 340 may protrude from the left or right edge of the plate 310. In addition, the side wall 340 may extend along the upper and lower direction or the Z-axis direction. The side wall 340 may be provided as a pair. The pair of side walls 340 may cover the outer side of the first sealing portion 220 of the outermost battery cell 201 of the battery array 200. The side wall 340 may be connected to the top wall 320. In addition, the side wall 340, the top wall 320, the partition wall 350, and the plate 310 may be formed integrally. The side wall 340, the top wall 320 and the plate 310 may form the accommodation space VS.

According to this configuration of the present disclosure, the thermal safety of the battery module may be improved. Since the side wall 340 covers the outermost first sealing portion 220 of the battery array 200, the movement of the venting gas g may be blocked. As a result, the propagation of the thermal event may be blocked.

Referring to FIGS. 4 and 5, the partition wall 350 of the battery module according to an embodiment of the present disclosure may be provided in plurality. The plurality of partition walls 350 may be arranged along the right and left direction or the Y-axis direction. The plurality of partition walls 350 may be arranged between the pair of side walls 340. For example, the plurality of partition walls 350 may be provided so that two first sealing portions 220 are accommodated in one accommodation space VS.

According to this configuration of the present disclosure, the thermal safety of the battery module may be improved. The partition wall 350 may minimize the propagation of thermal events by partitioning the accommodation space VS into small units.

Referring to FIGS. 4 and 5, the fire prevention cover 300 of the battery module according to an embodiment of the present disclosure may include a bottom wall 330. The bottom wall 330 may protrude from the plate 310 in the rear or -X-axis direction. The bottom wall 330 may protrude from the lower edge of the plate 310. Also, the bottom wall 330 may extend along the right and left direction or the Y-axis direction. The bottom wall 330 may entirely cover the lower side of the plurality of first sealing portions 220 of the battery array 200. The bottom wall 330, the top wall 320, the side wall 340, the partition wall 350, and the plate 310 may be formed integrally. The partition wall 350 may be connected to the bottom wall 330. The accommodation space VS may be formed by the bottom wall 330, the top wall 320, the side wall 340, the partition wall 350, and the plate 310. Alternatively, the accommodation space VS may be formed by the bottom wall 330, the top wall 320, the pair of partition walls 350, and the plate 310.

According to this configuration of the present disclosure, the thermal safety of the battery module may be improved. Since the bottom wall 330 covers the lower side of the first sealing portion 220, the movement of the venting gas g may be blocked. As a result, the propagation of the thermal event may be blocked.

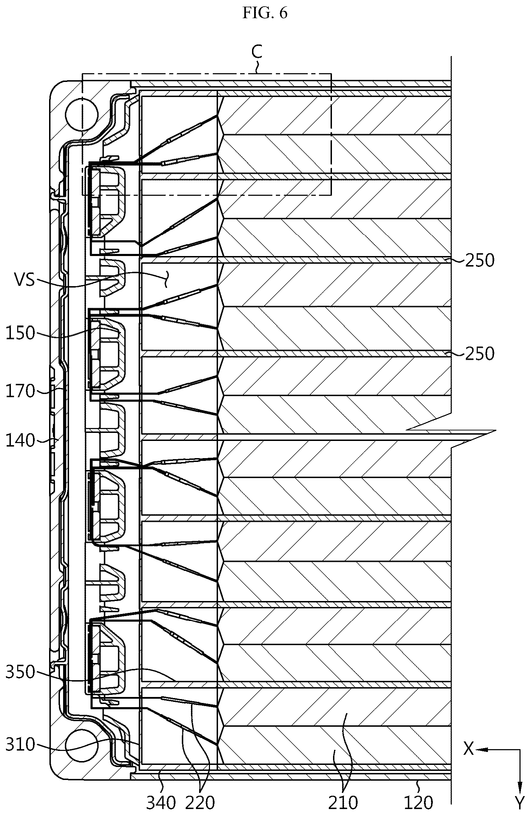

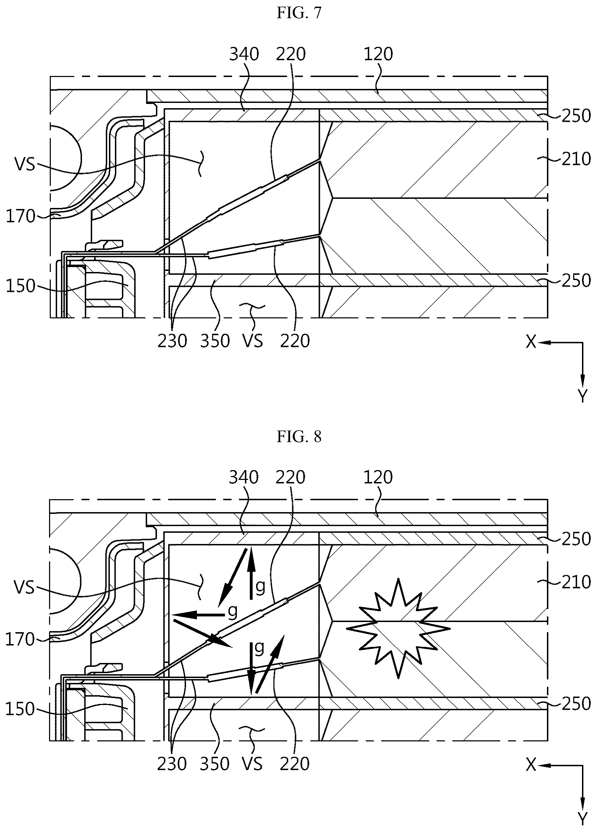

FIG. 6 is a cross-sectional view taken along the cutting line A-A' of FIG. 1. FIG. 7 is an enlarged drawing showing a part C of FIG. 6. FIG. 8 is an enlarged drawing showing the part C of FIG. 6 when a thermal event occurs.

Referring to FIGS. 4 to 8, the plate 310 of the battery module according to an embodiment of the present disclosure may have a slit 311. The slit 311 may penetrate the plate 310. Also, the slit 311 may extend along the upper and lower direction or the Z-axis direction. The electrode lead 230 may pass through the slit 311. The slit 311 may be provided for each accommodation space VS. In addition, the slit 311 may be provided to correspond to the plurality of electrode leads 230 in one-to-one relationship.

According to this configuration of the present disclosure, the thermal safety of the battery module may be improved. Since the plate 310 entirely covers the plurality of first sealing portions 220 of the battery array 200 and has a thin slit 311 through which the electrode lead 230 passes, it is possible to prevent the venting gas g or ignitable particles, etc. from moving to the bus bar frame assembly 150.

In addition, according to this configuration of the present disclosure, the fire prevention cover 300 may absorb shock caused by a thermal event, thereby reducing shock transmitted to the bus bar frame assembly 150. As a result, damage to the bus bar frame assembly 150 may be minimized, and electrical short circuit of the bus bar may be prevented.

Referring to FIGS. 6 to 8, the fire prevention cover 300 of the battery module according to an embodiment of the present disclosure may have a plurality of accommodation spaces VS. For example, the fire prevention cover 300 may have eight accommodation spaces VS. Also, each accommodation space VS may accommodate two first sealing portions 220. The two first sealing portions 220 may be surrounded by the fire prevention cover 300.

The venting gas g or ignitable particles discharged from the first sealing portion 220 may be blocked from moving forward by the plate 310. Also, the side wall 340 or the partition wall 350 may block the venting gas g or ignitable particles from moving along the right and left direction or the Y-axis direction.

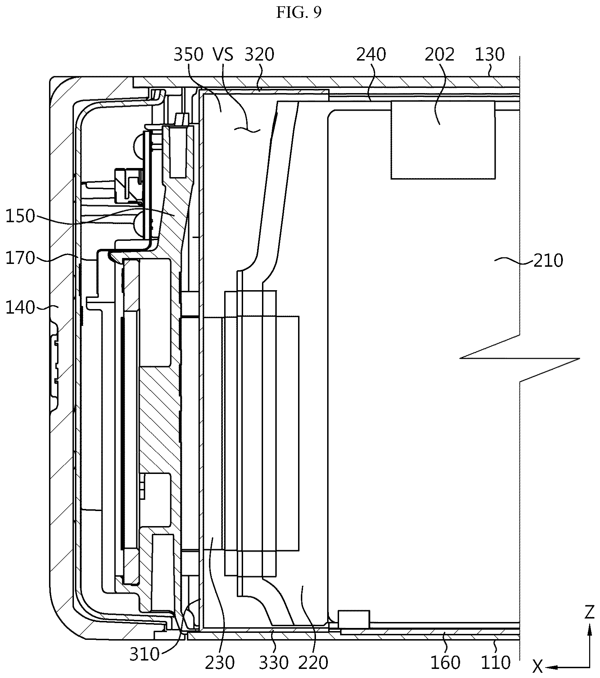

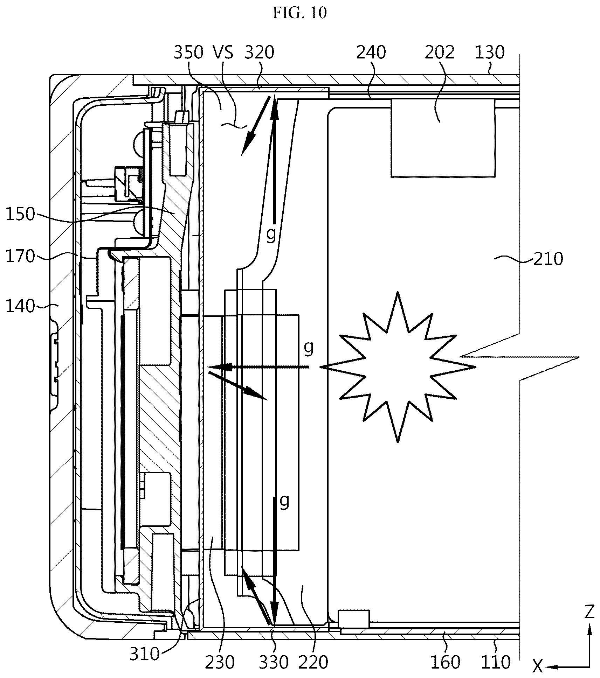

FIG. 9 is a cross-sectional view taken along the cutting line B-B' of FIG. 1. FIG. 10 is a cross-sectional view taken along the cutting line B-B' of FIG. 1 when a thermal event occurs. Referring to FIGS. 9 and 10, the venting gas g or ignitable particles discharged from the first sealing portion 220 may be blocked from moving forward by the plate 310. In addition, the top wall 320 may block the venting gas g or ignitable particles from moving in the upper direction or the +Z-axis direction. In addition, the bottom wall 330 may block the venting gas g or ignitable particles from moving in the downward direction or the -Z-axis direction.

According to this configuration of the present disclosure, the thermal safety of the battery module may be improved. By blocking the movement of the venting gas g, the propagation of the thermal event may be blocked. In addition, ignitable particles or flames, etc. may be captured in the accommodation space VS. As a result, the propagation of the thermal event may be blocked.

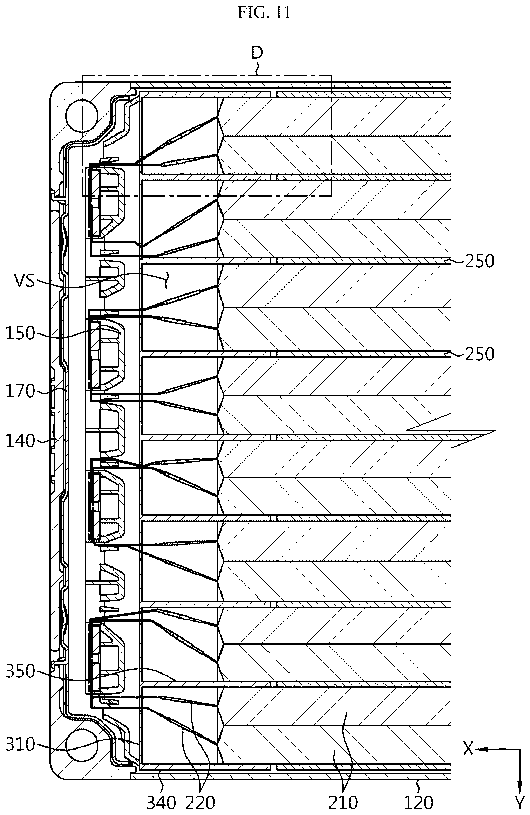

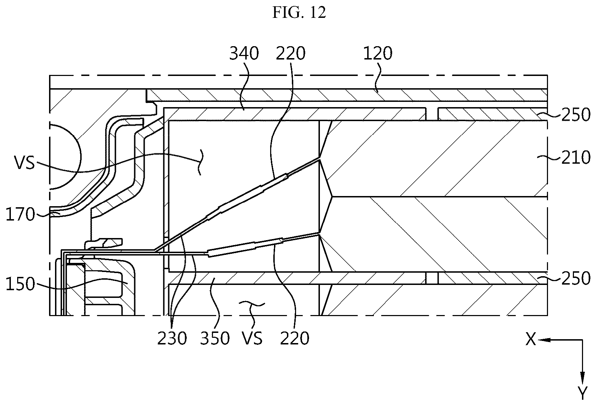

FIG. 11 is a drawing showing a modified embodiment of FIG. 6. FIG. 12 is an enlarged drawing showing a part D of FIG. 11. Referring to FIGS. 11 and 12, the partition wall 350 of the battery module according to an embodiment of the present disclosure may be extended in the rear direction or the -X-axis direction. The partition wall 350 may be extended to be positioned between neighboring accommodation portions 210. The partition wall 350 and the pad 250 may be positioned between the neighboring accommodation portions 210.

According to this configuration of the present disclosure, the partition wall 350 may more reliably block the venting gas g or ignitable particles from moving along the right and left direction or the Y-axis direction.

Referring to FIGS. 11 and 12, the side wall 340 of the battery module according to an embodiment of the present disclosure may be extended in the rear or -X-axis direction. The side wall 340 may be extended to cover the accommodation portion 210 of the battery cell 201 located at the outermost end of the battery array 200. Alternatively, the side wall 340 may be extended to be located between the accommodation portion 210 of the battery cell 201 located at the outermost end of the battery array 200 and the side plate 120. The side wall 340 and the pad 250 may be located between the accommodation portion 210 of the battery cell 201 located at the outermost end and the side plate 120.

According to this configuration of the present disclosure, the side wall 340 may more reliably block the venting gas g or ignitable particles from moving along the right and left direction or the Y-axis direction.

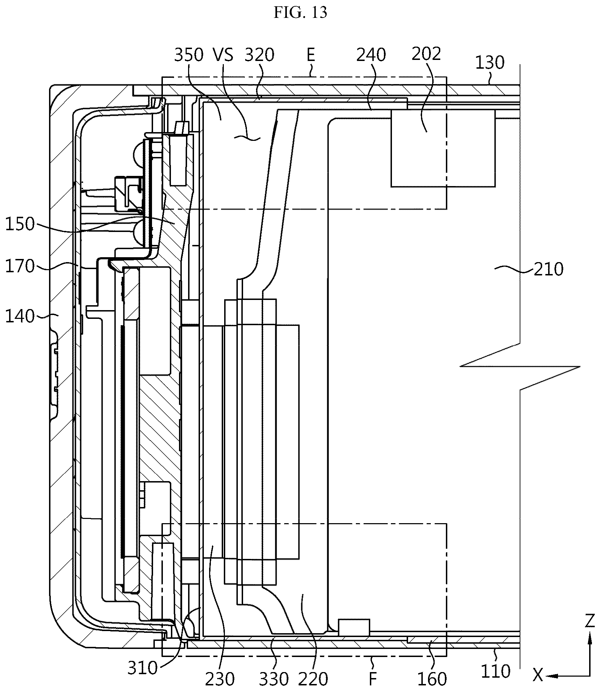

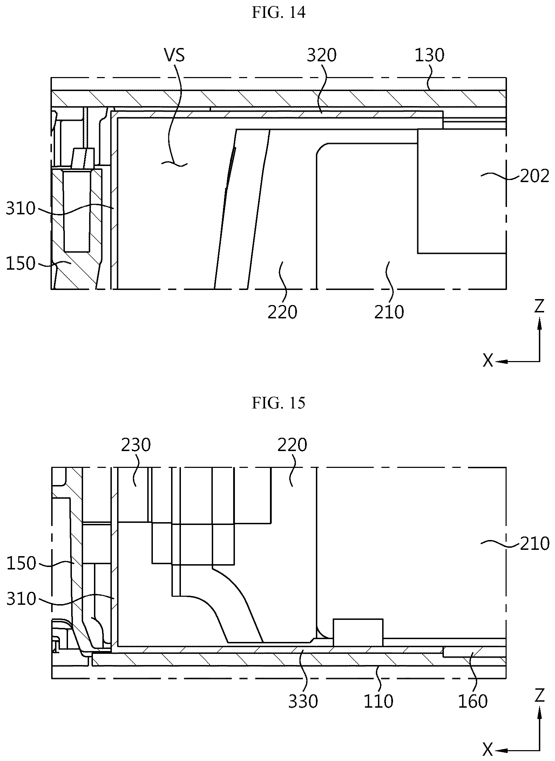

FIG. 13 is a drawing showing a modified embodiment of FIG. 9. FIG. 14 is an enlarged drawing showing a part E of FIG. 13. Referring to FIGS. 13 and 14, the top wall 320 of the battery module according to an embodiment of the present disclosure may be extended in the rear direction or the -X-axis direction. The top wall 320 may be extended to cover the upper side of the plurality of accommodation portions 210 of the battery array 200.

According to this configuration of the present disclosure, the top wall 320 may more reliably block the venting gas g or ignitable particles from moving along the upper direction or +Z-axis direction.

FIG. 15 is an enlarged drawing showing a part F of FIG. 13. Referring to FIGS. 13 and 15, the bottom wall 330 of the battery module according to an embodiment of the present disclosure may be extended in the rear direction or the -X-axis direction. The bottom wall 330 may be extended to cover the lower side of the plurality of accommodation portion 210 of the battery array 200. Alternatively, the bottom wall 330 may be extended to be positioned between the plurality of accommodation portion 210 of the battery array 200 and the bottom plate 110. The bottom wall 330 and the heat transfer member 160 may be positioned between the plurality of accommodation portion 210 of the battery array 200 and the base plate 310.

According to this configuration of the present disclosure, the bottom wall 330 may more reliably block the venting gas g or ignitable particles from moving in the downward direction or along the -Z-axis direction.

The battery pack according to the present disclosure may include one or more battery modules according to the present disclosure. For example, the battery pack according to the present disclosure may be configured to include a pack housing, so that a plurality of battery modules according to the present disclosure are accommodated inside the pack housing. In this case, when the battery module according to the present disclosure is accommodated, the effect of preventing heat propagation between battery modules is excellent in an emergency situation such as thermal runaway, and sufficient time for a user to respond or escape may be secured.

In addition, the battery pack according to the present disclosure may further include various components other than the battery module, such as various battery pack components known at the time of filing of this application, such as a BMS, a bus bar, a relay, a current sensor, etc.

The battery module according to the present disclosure may be applied to a vehicle such as an electric vehicle or a hybrid electric vehicle. That is, the vehicle according to the present disclosure may include the battery module according to the present disclosure or the battery pack according to the present disclosure. In addition, the vehicle according to the present disclosure may further include various other components included in the vehicle in addition to the battery module or the battery pack. For example, the vehicle according to the present disclosure may further include a vehicle body, a motor, a control device such as an ECU (electronic control unit), in addition to the battery module according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery module comprising:
a case providing a space therein;
a battery array including a plurality of battery cells positioned inside the case and stacked along a right and left direction, each battery cell having an accommodation portion extending in a front and rear direction and accommodating an electrode assembly and a sealing portion extending forward from the accommodation portion;
a bus bar frame assembly positioned at a front side of the accommodation portion and electrically connected to the battery array; and
a fire prevention cover positioned between the bus bar frame assembly and the accommodation portion and having an accommodation space for accommodating at least one sealing portion.

2. The battery module according to claim 1,
wherein the fire prevention cover contains a mica material.

3. The battery module according to claim 1,
wherein the fire prevention cover includes:
a plate configured to cover a front side of the sealing portion; and
a top wall protruding rearward from the plate and extending along the right and left direction to cover an upper side of the sealing portion.

4. The battery module according to claim 3,
wherein the top wall is extended to cover an upper side of the accommodation portion.

5. The battery module according to claim 3,
wherein the fire prevention cover further includes a partition wall that protrudes rearward from the plate and extends along an upper and lower direction to partition the accommodation space.

6. The battery module according to claim 5,
wherein the partition wall is provided in plurality, and
wherein the plurality of partition walls are arranged along the right and left direction.

7. The battery module according to claim 5,
wherein the partition wall is extended to be positioned between neighboring accommodation portions of the battery array.

8. The battery module according to claim 3,
wherein the fire prevention cover further includes a side wall that protrudes rearward from the plate and extends along an upper and lower direction to cover an outer side of the sealing portion of an outermost battery cell of the battery array.

9. The battery module according to claim 8,
wherein the side wall is extended to cover the accommodation portion of the outermost battery cell.

10. The battery module according to claim 3,
wherein the fire prevention cover further includes a bottom wall that protrudes rearward from the plate and extends along the right and left direction to cover a lower side of the sealing portion.

11. The battery module according to claim 10,
wherein the bottom wall is extended to be located below the accommodation portion.

12. The battery module according to claim 3,
wherein the plate has a slit, and
wherein the battery array includes an electrode lead that protrudes forward from the sealing portion and passes through the slit to be connect to the bus bar frame assembly.

13. A battery pack, comprising the battery module according to any one of claims 1 to 12.

14. A vehicle, comprising the battery module according to any one of claims 1 to 12.
